Europäisches Patentamt

European Patent Office

Office européen des brevets

(19)

(11) Veröffentlichungsnummer: **0 373 456**
**A2**

(12) **EUROPÄISCHE PATENTANMELDUNG**

(21) Anmeldenummer: **89122267.1**

(22) Anmeldetag: **02.12.89**

(51) Int. Cl.⁵: **A01G 9/00, C08G 18/38, C08K 5/52**

(30) Priorität: **15.12.88 DE 3842220**

(43) Veröffentlichungstag der Anmeldung:
**20.06.90 Patentblatt 90/25**

(84) Benannte Vertragsstaaten:
**AT BE CH DE ES FR GB IT LI NL SE**

(71) Anmelder: **BAYER AG**

**D-5090 Leverkusen 1 Bayerwerk(DE)**

(72) Erfinder: **Welte, Rainer, Dr.**
**Kaiserstrasse 7**
**D-5090 Leverkusen 1(DE)**
Erfinder: **Scholl, Hans-Joachim, Dr.**
**Am Feldrain 5**
**D-5000 Köln 80(DE)**

(54) **Verfahren zur Herstellung von offenzelligen, hydrophilen Polyurethanschaumstoffen.**

(57) Die Erfindung betrifft ein Verfahren zur Herstellung von offenzelligen, hydrophilen Polyurethanschaumstoffen mit einer Dichte von 10 bis 60 kg/m³ durch Umsetzung von Polyisocyanaten mit Verbindungen mit mindestens zwei gegenüber Isocyanaten reaktionsfähigen Wasserstoffatomen und einem Molekulargewicht von 400 bis 10.000 in Gegenwart von Wasser als Treibmittel sowie gegebenenfalls in Gegenwart von Verbindungen mit mindestens zwei gegenüber Isocyanaten reaktionsfähigen Wasserstoffatomen und einem Molekulargewicht von 32 bis 399 und gegebenenfalls in Gegenwart von Hilfs- und Zusatzmitteln, dadurch gekennzeichnet, daß 5 bis 20 mmol Säure, bezogen auf 100 g Gemisch aus Polyhydroxylverbindungen, Wasser und ggf. Zusatzmitteln, mitverwendet werden.

EP 0 373 456 A2

## Verfahren zur Herstellung von offenzelligen, hydrophilen Polyurethanschaumstoffen

Die Erfindung betrifft ein neues Verfahren zur Herstellung von offenzelligen, hydrophilen Polyurethanschaumstoffen sowie die Verwendung dieser Schaumstoffe als Stecksubstrat für Schnittblumen.

Verfahren zur Herstellung offenzelliger, hydrophiler Schaumstoffe als Stecksubstrat sind bekannt. Entsprechende Verfahren sind z.B. in den US-Patentschriften 2 988 441 und 3 373 009, in der DE-AS 1 229 662 sowie in der Veröffentlichung E. Weinbrenner und J. Niggemann, "Stecklingsvermehrung und Kultur in Blocksubstraten aus Polyurethan-Schaumstoff", Gartenwelt 70 (1970), Seiten 71 - 73, beschrieben. Nachteilig ist bei diesem Verfahren das geringe Wasserhaltevermögen entsprechender Schäume.

DE-A 2 304 892 stellt insofern eine Weiterentwicklung dar, als im wesentlichen durch Mitverwendung modifizierter Polyisocyanate (Urethan-, Harnstoffmodifizierung o.ä.) der Mangel des zu geringen Wasserhaltevermögens überwunden wird. Nachteilig ist die aufwendige Isocyanat-Modifizierung zur Herstellung derartiger Stecksubstrate

Dies gilt auch für die DE-A 2 441 843, nach der entsprechende Vorab-Isocyanat-Modifizierungen mit organischen Sulfonsäuren beansprucht werden, damit Stecksubstrate mit ausreichendem Wasserhaltevermögen hergestellt werden können

DE-A 3 627 236 offenbart ein Verfahren zur Herstellung von Stecksubstraten ohne den Einsatz vorab modifizierter Polyisocyanate unter Mitverwendung von FCKW-Treibmitteln. Neben diesem allein schon aus ökologischen Gründen gravierenden Nachteil ist auch das Wasserhaltevermögen derartiger Stecksubstrate mangelhaft, wie das Vergleichsbeispiel belegt.

Der Erfindung lag die Aufgabe zugrunde, ein neues Verfahren zur Herstellung entsprechender Stecksubstrate mit ausreichendem Wasserhaltevermögen zur Verfügung zu stellen, das

a) auf aufwendige Vorab-Isocyanat-Modifizierungen verzichtet,

b) den Einsatz von FCKW-Treibmitteln vermeidet.

Wie überraschenderweise gefunden wurde, konnte diese Aufgabe mit dem nachstehend näher beschriebenem, erfindungsgemäßen Verfahren gelöst werden.

Gegenstand der Erfindung ist ein Verfahren zur Herstellung von offenzelligen, hydrophilen Polyurethanschaumstoffen mit einer Dichte von 10 bis 60 kg/m$^3$ durch Umsetzung von Polyisocyanaten mit Verbindungen mit mindestens zwei gegenüber Isocyanaten reaktionsfähigen Wasserstoffatomen und einem Molekulargewicht von 400 bis 10 000 in Gegenwart von Wasser als Treibmittel sowie gegebenenfalls in Gegenwart von Verbindungen mit mindestens zwei gegenüber Isocyanaten reaktionsfähigen Wasserstoffatomen und einem Molekulargewicht von 32 bis 399 und gegebenenfalls in Gegenwart von Hilfs- und Zusatzmitteln, dadurch gekennzeichnet, daß 5 bis 20 mmol Säure, bezogen auf 100 g Gemisch aus Polyhydroxylverbindungen, Wasser und ggf. Zusatzmitteln, mitverwendet werden.

Erfindungsgemäß bevorzugt ist, daß als Säure Phosphorsäure oder substituierte Phosphorsäure mitverwendet wird.

Gegenstand der Erfindung ist auch die Verwendung der erfindungsgemäßen Polyurethanschaumstoffe als Stecksubstrat für Schnittblumen.

Von erfindungswesentlicher Bedeutung ist die Mitverwendung von (anorganischen und/oder organischen) Säuren. Zu den geeigneten anorganischen Säuren gehören Salzsäure, Schwefelsäure und Phosphorsäure-oder beliebige Gemische der benannten Säuren Besonders bevorzugt ist Phosphorsäure oder organisch substituierte Phosphorsäure. Zu den geeigneten organischen Säuren gehören Carbonsäuren, Sulfonsäuren oder saure Phosphorsäureester. Bevorzugt sind organische Säuren mit einem pka < 2 wie z.B Sulfonsäuren oder Phosphorsäurediester, von denen Alkylbenzolsulfonsäuregemische oder Phosphorsäuredialkylester besonders bevorzugt sind.

Die genannten Säuren werden beim erfindungsgemäßen Verfahren in Mengen von 1 bis 100 mmol, vorzugsweise 5 bis 20 mmol pro 100 g "Polyolabmischung" eingesetzt, wobei als "Polyolatmischung" die Summe an einzusetzenden Polyolen, Wasser sowie üblichen Zusatzmitteln auf der Polyolseite zu verstehen ist. Üblicherweise wird die Säure bei der Schaumherstellung über die "Polyolseite" eingebracht. Selbstverständlich kann die Säure auch separat zudosiert werden.

Für die Durchführung des erfindungsgemäßen Verfahrens zur Herstellung der offenzelligen, hydrophilen Stecksubstrate werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 362, Seiten 75 bis 136, beschrieben werden, beispielsweise solche der Formel

Q(NCO)$_n$

in der

2

n = 2 bis 4, vorzugsweise 2 bis 3 und

Q einen aliphatischen Kohlenwasserstoffrest mit 2 bis 18, vorzugsweise 6 bis 10 C-Atomen,

einen cycloaliphatischen Kohlenwasserstoffrest mit 4 bis 15, vorzugsweise 5 bis 10 C-Atomen,

einen aromatischen Kohlenwasserstoffrest mit 6 bis 15, vorzugsweise 6 bis 13 C-Atomen

bedeuten, z.B. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI") und Polyphenylpolymethylen-polyisocyanate, wie sie durch Anilin-Formaldehyd-Kondensation und anschließende Phosgenierung hergestellt werden ("rohes MDI").

2. Ausgangskomponenten sind ferner Verbindungen mit mindestens zwei gegenüber Isocyanaten reaktionsfähigen Wasserstoffatomen von einem Molekulargewicht in der Regel von 400 bis 10.000. Hierunter versteht man neben Aminogruppen, Thiolgruppen oder Carboxylgruppen aufweisenden Verbindungen, vorzugsweise Hydroxylgruppen aufweisende Verbindungen, insbesondere zwei bis acht Hydroxylgruppen aufweisende Verbindungen, speziell solche vom Molekulargewicht 1.000 bis 6.000, vorzugsweise 2.000 bis 6.000, z.B. mindestens zwei, in der Regel zwei bis acht, vorzugsweise aber 2 bis 6, Hydroxylgruppen aufweisende Polycarbonate und Polyesteramide, wie sie für die Herstellung von homogenen und von zellförmigen Polyurethanen an sich bekannt sind und wie sie z.B. in der DE-OS 2 832 253, Seiten 11 bis 18, beschrieben werden. Bevorzugt sind durch Einbau von Ethylenoxid und/ oder Ethylenglykol oder auf andere Weise hydrophilierte Produkte, insbesondere solche, die zu mindestens 50 Gew.-% (bezogen auf alle OH-Gruppen) primäre OH-Gruppen aufweisen.

3. Gegebenenfalls kommen als Ausgangskomponenten Verbindungen mit mindestens zwei gegenüber Isocyanaten reaktionsfähigen Wasserstoffatomen und einem Molekulargewicht von 32 bis 399 in Frage. Auch in diesem Fall versteht man hierunter Hydroxylgruppen und/oder Aminogruppen und/oder Thiolgruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen.

Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 - 20 beschrieben.

4. Wasser als Treibmittel. Es wird zweckmäßigerweise in Mengen von 5-14, vorzugsweise 6-12 Gew.-%, bezogen auf die eingesetzte Ausgangskomponente 2. ("Polyol-Komponente"), verwendet.

5. Gegebenenfalls Hilfs- und Zusatzmittel wie

a) Katalysatoren der an sich bekannten Art in Mengen von bis zu 50 Gew.-%, bezogen auf die Menge an erfindungsgemäß zu verwendender Säure,

b) oberflächenaktive Zusatzstoffe wie Emulgatoren und Schaumstabilisatoren,

c) Reaktionsverzögerer, Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 2 732 292, Seiten 21 - 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München, 1966, z.B. auf den Seiten 103 - 113 beschrieben.

Die Herstellung der offenzelligen, hydrophilen Polyurethanschaumstoffe erfolgt in an sich bekannter Weise.

Beispiel 1 (Vergleich)

Nacharbeitung von DE-A 3 627 236, Spalten 10 - 11, Beispiel 1:

PE 190 wurde nachgestellt durch eine 5 : 8 Mischung zweier Polyethylenglykolether oder OH-Zahlen 380 und 72.

EPO 770 wurde nachgestellt durch eine 1 : 3 Mischung zweier ethylendiamingestarteter-propylenoxid-Ether der OH-Zahlen 650 und 810.

Alle übrigen Komponenten waren identisch mit den in den Beispielen angegebenen Substanzen.

Folgende Kenndaten wurden unter Laborbedingungen ermittelt:

$t_L$ = 17 sec (Liegezeit)

$t_A$ = 33 sec (Abbindezeit)

$t_{Abblas}$ = 40 sec (Abblaszeit $\hat{=}$ Steigzeit)

Die Zellstruktur des Schaumstoffs war gleichmäßig und fein, die Rohdichte betrug nach Abkühlen 66 kg/m$^3$. Dabei ist zu berücksichtigen, daß der Schaum beim Abkühlen stark schrumpft.

Die Rohdichte eines solchen Schaumstoffes ist erheblich zu hoch und auch die Steckfähigkeit ist nicht ausreichend. Auch die Wasseraufnahme liegt mit ca. 11 Vol.-% zwar erheblich höher als bei normalem PU-Hartschaum ist jedoch für eine Anwendung als professioneller hydrophiler Steckschaum wesentlich zu niedrig.

Beispiel 2

Dieses Beispiel zeigt, daß ohne Phosphorsäure mit einer der Standardrezeptur entsprechenden-Polyolformulierung zwar ein brauchbarer Schaum herzustellen ist, die Wasseraufnahme ist jedoch absolut unzureichend.

Beispiel 3 zeigt die dramatische Verbesserung der Wasseraufnahme durch den Zusatz von Phosphorsäure.

Beispiel 4 (Vergleich) zeigt die Standardrezeptur unter Verwendung von modifiziertem Isocyanat (wie in DE-OS 2 441 843 beschrieben).

Beispiel 5 zeigt die Verwendung einer anderen anorganischen Säure.

Beispiel 6 zeigt die Verwendung einer substituierten Phosphonsäure.

4

Tabelle

| Beispiel Nr.: | 2 | 3 | 4 | 5 | 6 |
|---|---|---|---|---|---|
| Polyol[2] (GT) | 88 | 88 | 88 | 88 | 88 |
| Wasser (GT) | 8 | 8 | 10 | 1,8 | 8 |
| Stabilisator[1] (GT) | 2 | 2 | 2 | 2 | 2 |
| Phosphorsäure 85%ig (GT) | - | 1 | - | - | - |
| Salzsäure 10%ig (GT) | - | - | - | 8 | - |
| Phosphorsäuredibutylester (GT) | - | - | - | - | 2 |
| Polyisocyanat[3] (GT) | - | - | 135 | - | - |
| MDI (roh) (GT) | 135 | 135 | - | 135 | - |
| Rührzeit (sec) | 15 | 15 | 15 | 15 | 15 |
| Liegezeit (sec) | 30 | 23 | 28 | 28 | 27 |
| Abblaszeit (sec) | 72 | 63 | 85 | 62 | 68 |
| Klebfreizeit (sec) | 78 | 66 | 100 | 75 | 77 |
| Zellgröße | fein | fein | fein | fein | fein |
| Zellstruktur | **gleichmäßig** | | | | |
| Schrumpf bei Raumtemperatur | nein | nein | nein | nein | nein |
| Rohdichte kg/m³ | 24,6 | 26,2 | 24,5 | 29 | 22,3 |
| Steckfähigkeit | gut | gut | gut | mittel | gut |
| Wasseraufn. Vol.-% | 3,4 | 85,9 | 25,4 | 20 | 80 |
| GT = Gewichtsteile | | | | | |

1) Polyethersiloxan der Fa. BP

2) Polyethermischung folgender Zusammensetzung: 18 GT eines trifunktionellen Polyethers (Glycerin ← 55 % PO ← 45 % EO, OHZ = 56); 37 GT eines Aminopolyethers (Ethylendiamin ← PO, OHZ = 630), 15 G Glycerin; 30 GT eines trifunktionellen Polyethers (Trimethylolpropan ← 33 % PO ← 67 % EO, OHZ = 615)

3.) Präpolymer aus 110 Gew.-Tln Roh-MDI und 10 GT Marlon® AS-3-Säure ($C_{10}$-$C_{13}$-Alkylbenzolsulfonsäure der Firma Hüls AG), NCO-Gehalt 28 Gew.-%

## Ansprüche

1. Verfahren zur Herstellung von offenzelligen, hydrophilen Polyurethanschaumstoffen mit einer Dichte von 10 bis 60 kg/m³ durch Umsetzung von Polyisocyanaten mit Verbindungen mit mindestens zwei gegenüber Isocyanaten reaktionsfähigen Wasserstoffatomen und einem Molekulargewicht von 400 bis 10.000 in Gegenwart von Wasser als Treibmittel sowie gegebenenfalls in Gegenwart von Verbindungen mit mindestens zwei gegenüber Isocyanaten reaktionsfähigen Wasserstoffatomen und einem Molekulargewicht von 32 bis 399 und gegebenenfalls in Gegenwart von Hilfs- und Zusatzmitteln, dadurch gekennzeichnet, daß 5 bis 20 mmol Säure, bezogen auf 100 g Gemisch aus Polyhydroxylverbindungen, Wasser und ggf. Zusatzmitteln, mitverwendet werden.

2. Verfahren gemäß Anspruch 1, dadurch gekennzeichnet, daß als Säure Phosphorsäure oder substituierte Phosphorsäure mitverwendet wird.

3. Verwendung der gemäß Anspruch 1 und 2 erhältlichen Polyurethanschaumstoffe als Stecksubstrat für Schnittblumen.